# EUROPEAN PATENT APPLICATION

(11) **EP 3 805 471 A1**
(43) Date of publication of application: **14.04.2021**
(21) Application number: 20171137.1
(22) Date of filing: 23.04.2020
(51) Int. Cl.: E03C 1/06, F16B 7/04

(54) **SHOWER DEVICE LIFTING ROD**

(30) Priority: 11.10.2019 CN 201921698311 U
(71) Applicant: Fujian Xihe Sanitary Ware Technology Co., Ltd., QuanZhou, Fujian 362304 (CN)
(72) Inventor: Lin, Xiaofa, QuanZhou, Fujian (CN); Lin, Xiaoshan, QuanZhou, Fujian (CN); Deng, Xiaoqing, QuanZhou, Fujian (CN); Liu, Qiqiao, QuanZhou, Fujian (CN)
(74) Representative: Patentanwälte Bals & Vogel

(57) **Abstract**

A shower device lifting rod includes a first rod member (10) including a first connection portion (11) disposed at one end thereof, a second rod member (20) including a second connection portion (21) disposed at one end thereof, and a connection member (30) including a third connection portion (31) and a fourth connection portion (32) disposed at two ends thereof. The third connection portion (31) is fixedly connected to the first connection portion (11) after being inserted in the first connection portion (11), and the fourth connection portion (32) is fixedly connected to the second connection portion (21) after being inserted in the second connection portion (21). The members may be separated when the shower device lifting rod adopting such structure is packaged and transported and may then be put together when the shower device lifting rod is actually assembled. In this way, a package volume is reduced and transportation costs are lowered.

## Description

### BACKGROUND

### Technical Field

The disclosure relates to a shower device technical field, and more particularly, involves a shower device lifting rod.

### Description of Related Art

A shower device or a showerhead for household use is generally connected to a hose to spray water, so that the shower device or the showerhead may be held by hand when being used. Alternatively, the shower device or the showerhead may be fixed to and inserted in a showerhead fixing bracket fixed to the wall. As regards the above two manners of using a showerhead, movement of the two hands of a user may be restricted since the showerhead is required to be held by hand in the first manner. In the second manner, since the fixing bracket is fixed, it is difficult to select a height position at which the fixing bracket may be installed to be suitable for users with different heights. Accordingly, in the existing art, a lifting rod assembly configured to adjust the height position of a showerhead fixing bracket is provided. A sliding groove or a guide rail is disposed on one side surface of the lifting rod. The fixing bracket may move up and down along the sliding groove or the guide rail, so that the height position of the fixing bracket may be arbitrarily adjusted. Nevertheless, most of the existing lifting rods have an integral structure, and such structure features a long length. These lifting rods thereby exhibit a large packaging volume after being packaged before leaving the factory and thus may not be conveniently transported as well.

### SUMMARY

The following is a brief description of the subject to be explained in detail in the specification, and the brief description is not intended to limit the protection scope of the claims.

An embodiment of the disclosure provides a shower device lifting rod including a first rod member including a first connection portion disposed at one end thereof, a second rod member including a second connection portion disposed at one end thereof, and a connection member including a third connection portion and a fourth connection portion disposed at two ends thereof. The third connection portion is fixedly connected to the first connection portion after being inserted in the first connection portion, and the fourth connection portion is fixedly connected to the second connection portion after being inserted in the second connection portion. Preferably, a shape of the first connection portion and a shape of the third connection portion are matched, and a shape of the second connection portion and a shape of the fourth connection portion are matched.

Preferably, a first protrusion is provided on the third connection portion in a length direction, a first groove is provided on the first connection portion in the length direction, and a shape of the first protrusion and a shape of the first groove are matched. A second protrusion is provided on the fourth connection portion in the length direction, a second groove is provided on the second connection portion in the length direction, and a shape of the second protrusion and a shape of the second groove are matched.

Preferably, an outward-extending third protrusion is provided at a middle position along a circumference of the connection member, and the third protrusion is configured to butt against end portions of the first rod member and the second rod member.

Preferably, the first connection portion is engaged with or pin connected to the third connection portion, and the second connection portion is engaged with or pin connected to the fourth connection portion.

Preferably, the shower device lifting rod further includes a first pin connection shaft and a second pin connection shaft. A first through hole and a third through hole are respectively provided at a corresponding position of the first connection portion and the third connection portion, and a second through hole and a fourth through hole are respectively provided at a corresponding position of the second connection portion and the fourth connection portion. The first pin connection shaft penetrates the first through hole and the third through hole, and the second pin connection shaft penetrates the second through hole and the fourth through hole.

Preferably, a first engaging recess and a first engaging buckle are respectively provided at a corresponding position of the first connection portion and the third connection portion, and a second engaging recess and a second engaging buckle are respectively provided at a corresponding position of the second connection portion and the fourth connection portion. The first engaging buckle is engaged with the first engaging recess after the third connection portion is inserted in the first connection portion, and the second engaging buckle is engaged with the second engaging recess after the fourth connection portion is inserted in the second connection portion.

Based on the above description of the disclosure, the disclosure exhibits the following effects compared to the existing art.
1. Through arrangement of the connection member, the first rod member and the second rod member are fixedly connected, so that the three members may be separated during packaging and transportation. The three members may be assembled into the complete lifting rod during actual assembly, so that a packaging volume is reduced, and transportation difficulty is lowered.
2. The shapes of the connection portions of the connection member and the first rod member and the second rod member are matched with each other. In this way, the connection member may be easily inserted in and connected to the first rod member and the second rod member, and stability is improved after such insertion and connection is performed.
3. Protrusions are provided on the connection member in the length direction, and grooves are provided on the first rod member and the second rod member in the length direction. Matching between the protrusions and grooves may further improve stability after the connection member is inserted in and connected to the first rod member and the second rod member and may also be used to point out an installation direction. Easy installation is thus provided.
4. The outward-extending protrusion provided along the circumference of the connection member is configured to define the positions of the connection member after the connection member is inserted in the first rod member and the second rod member. Positions may thus be ensured for pin connection or engaging connection.
5. The connection member is fixedly connected to the first rod member and the second rod member through engaging connection or pin connection. A simple structure is thus provided, and installation may be performed conveniently.

### BRIEF DESCRIPTION OF THE DRAWINGS

To make the technical solutions provided in the embodiments of the disclosure more clearly illustrated, several accompanying drawings required by the embodiments for description are briefly introduced as follows.
FIG. 1 is a schematic view of a structure of a shower device lifting rod provided by a first example of the disclosure.
FIG. 2 is a schematic view of a structure of a connection member in FIG. 1.
FIG. 3 is a schematic view of a structure of a first rod member 10 in FIG. 1.
FIG. 4 is a schematic view of a structure of a shower device lifting rod provided by a second example of the disclosure.
FIG. 5 is a schematic view of a structure of a connection member in FIG. 4.
FIG. 6 is a schematic view of a structure of a second rod member 20 in FIG. 1

Explanation for the main reference numerals:
10 first rod member; 11 first connection portion; 12 first groove; 13 first through hole; 14 first engaging recess; 20 second rod member; 21 second connection portion; 22 second groove; 23 second through hole; 24 second engaging recess; 30 connection member; 31 third connection portion; 311 first protrusion; 312 third through hole; 313 first engaging buckle; 32 fourth connection portion; 321 second protrusion; 322 fourth through hole; 323 second engaging buckle; 33 third protrusion; 41 first pin connection shaft; 42 second pin connection shaft; 50 adhesion tape; 60 decoration cover.

### DESCRIPTION OF THE EMBODIMENTS

The accompanying drawings in the embodiments of the disclosure are included to provide a clear and complete description of the technical solutions provided in the embodiments of the disclosure.

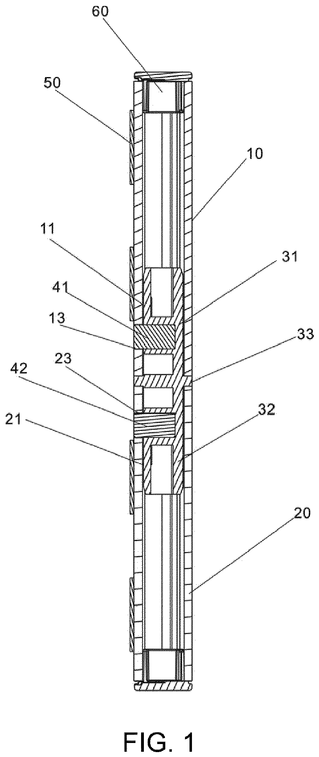

With reference to FIG. 1, FIG. 1 is a schematic view illustrating a structure of a shower device lifting rod provided by a first example of the disclosure. The shower device lifting rod mainly includes a first rod member 10, a second rod member 20, a connection member 30, a first pin connection shaft 41, a second pin connection shaft 42, an adhesion tape 50, and decoration covers 60.

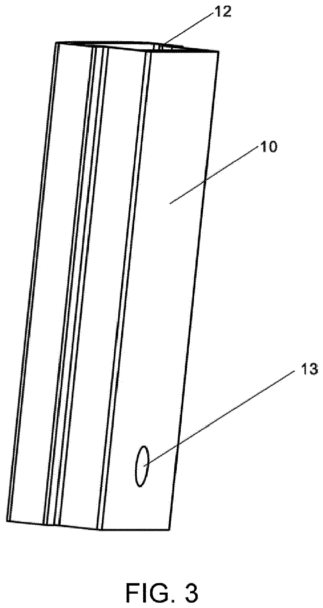

Specifically, as shown in FIG. 3, the first rod member 10 has a prism-shaped structure and an internal cavity, and the cavity forms a first connection portion 11 at one end portion position of the first rod member 10. A first groove 12 is provided on a side position of the first connection portion 11 in a length direction of the first rod member 10. The first groove 12 is located on two edges of a same side of the prism-shaped structure provided by the first rod member 10. Compared to a flat inner wall of the first rod member 10, the first groove 12 protrudes outward entirely, which makes a cross section of the first rod member 10 form a T-shaped structure as a whole. A first through hole 13 is disposed on another side wall of the first connection portion 11 of the first rod member 10 opposite to the first groove 12, and the first through hold 13 is configured to be matched with the first pin connection shaft 41.

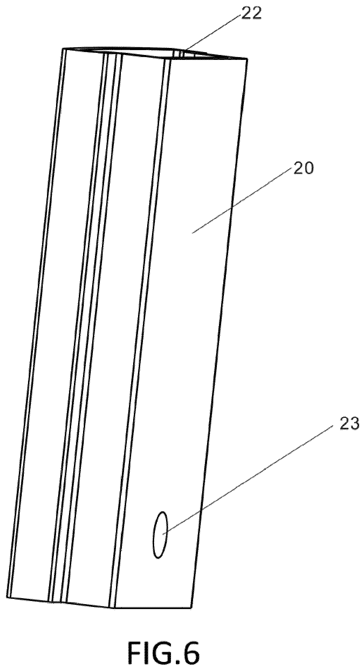

As shown in FIG. 6, a structure of the second rod member 20 is similar to that of the first rod member 1. The second rod member 20 has an internal cavity as well, and the cavity forms a second connection portion 21 at one end portion position of the second rod member 20. A second groove 22 is provided on a side position of the second connection portion 21 in a length direction of the second rod member 20. The second groove 22 is located on two edges of a same side of the prism-shaped structure provided by the second rod member 20. Compared to a flat inner wall of the second rod member 20, the second groove 22 protrudes outward, which makes a cross section of the second rod member 20 form a T-shaped structure as a whole. A second through hole 23 is disposed on another side wall of the second connection portion 21 of the second rod member 20 opposite to the second groove 22, and the second through hole 23 is configured to be matched with the second pin connection shaft 42.

In this embodiment, the first rod member 10 is disposed above the second rod member 20. The first connection portion 11 is located at a lower end portion of the first rod member 10, and the second connection portion 21 is located at an upper end portion of the second rod member 20.

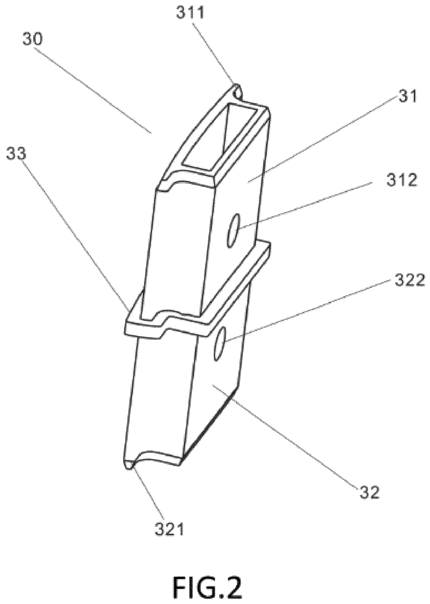

As shown in FIG. 2, the connection member 30 exhibits a prism structure, and an internal portion thereof may be hollow or solid. Two end portions are formed in a length direction of the connection member 30, and the two end portions form a third connection portion 31 and a fourth connection portion 32. Specifically, a shape of the third connection portion 31 is matched with a shape of the first connection portion 11, and a shape of the fourth connection portion 32 is matched with a shape of the second connection portion 21. In this way, the third connection portion 31 may be inserted in the first connection portion 11, and the fourth connection portion 32 may be inserted in the second connection portion 21.

A first protrusion 311 is provided on a side position of the third connection portion 31 in the length direction of the connection member 30. The first protrusion 311 is located on two edges of a same side of the prism structure provided by the connection member 30. Compared to a flat outer wall of the connection member 30, the first protrusion 311protrudes outward, which makes a cross section of the third connection portion 31 of the connection member 30 form a T-shaped structure as a whole. A third through hole 312 is disposed on another side wall opposite to the first protrusion 311, and the third through hole 312 is configured to be matched with the first pin connection shaft 41.

A structure of the fourth connection portion 32 is identical to that of the third connection portion 31, and the third connection portion 31 and the fourth connection portion 32 are positioned in a manner to be mirror images of each other. A second protrusion 321 is provided on a side position of the fourth connection portion 32 in the length direction of the connection member 30. The second protrusion 321 is located on two edges of a same side of the prism structure provided by the connection member 30. Compared to the flat outer wall of the connection member 30 the second protrusion 321 protrudes outward, which makes a cross section of the fourth connection portion 32 of the connection member 30 form a T-shaped structure as a whole. A fourth through hole 322 is disposed on another side wall opposite to the second protrusion 321, and the fourth through hole 322 is configured to be matched with the second pin connection shaft 42.

A third protrusion 33 is disposed on a middle position of the connection member 30, that is, a junction of the third connection portion 31 and the fourth connection portion 32. The third protrusion 33 is disposed along a circumference of the connection member 30, surrounds the connection member 30 once, and is perpendicular to a surface of the connection member 30 and extends outward. A protrusion structure opposite to the surface of the connection member 30 and extending outward is thereby obtained. After the connection member 30 is matched with and inserted in the first rod member 10 and the second rod member 20, a lower end surface of the first rod member 10 butts against an upper surface of the third protrusion 33, and an upper end surface of the second rod member 20 butts against a lower surface of the third protrusion 33. In this way, continuous movement of the first rod member 10 and the second rod member 20 are restricted.

In this embodiment, the first rod member 10, the connection member 30, and the second rod member 20 are connected through pin connection. The position of the first through hole 13 on the first connection portion 11 corresponds to the position of the third through hole 312 on the third connection portion 31, and the position of the second through hole 23 on the second connection portion 21 corresponds to the position of the fourth through hole 322 of the fourth connection portion 32. After the third connection portion 31 is inserted in and connected to the first connection portion 11, the first through hole 13 is aligned with the third through hole 312, and the first pin connection shaft 41 sequentially penetrates the first through hole 13 and the second through hole 312. In this way, the first rod member 10 is connected to the connection member 30.

The second rod member 20 is connected in a way similar to that described above. The second pin connection shaft 42 sequentially penetrates the aligned second through hole 23 and the fourth through hole 322 after insertion. In this way, the second rod member 20 is connected to the connection member 30.

After the first rod member 10, the connection member 30, and the second rod member 20 are connected as an integral lifting rod, upper and lower ends of the lifting rod are covered by the decoration covers 60. The adhesion tape 50 is attached to a back portion of the first rod member 10 or is attached to back portions of the first rod member 10 and the second rod member 20, and the lifting rod is then fixed to a wall.

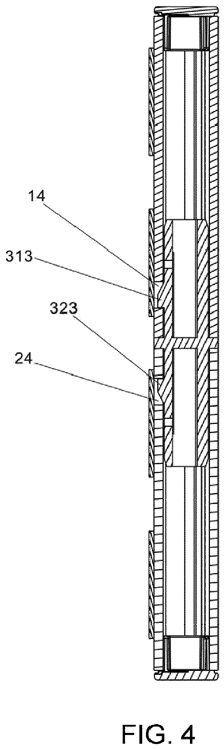

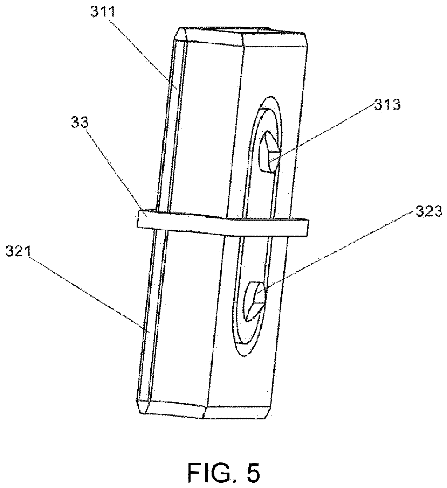

The disclosure further provides a second example illustrating a shower device lifting rod, and a difference between the second example and the first example is the use of engagement connection. Specifically, as shown in FIG. 4 and FIG. 5, a first engaging recess 14 and a second engaging recess 24 are adopted instead of the first through hole 13 and the second through hole 23, and a first engaging buckle 313 and a second engaging buckle 323 are adopted instead of the third through hole 312 and the fourth through hole. When the connection member 30 is inserted in the first rod member 10, the first engaging buckle 313 is deformed first and is then restored to an original shape thereof at the first engaging recess 14, so that engaging connection is performed. Similarly, when the connection member 30 is inserted in the second rod member 20, the second engaging buckle 323 is deformed first and is then restored to an original shape thereof at the second engaging recess 24, so that engaging connection is performed. In this way, the first rod member 10, the connection member 30, and the second rod member 20 are fixedly connected.

In view of the above, the shower device lifting rod provided by the disclosure includes the first rod member, the connection member, and the second rod member. The first rod member and the second rod member are fixedly connected through the use of the connection member, so that the three members may be separated during packaging and transportation. The three members may be assembled into the complete lifting rod during actual assembly, so that a packaging volume is reduced, and transportation difficulty is lowered.

Although the description of the specification and embodiments provided above serve to explain the scope of the disclosure, such description should not be construed as limitations on the scope of the disclosure. Through inspiration provided by the disclosure or the embodiments, modifications, equivalents, or other improvements of the embodiments or part of the technical features of the disclosure obtained by people having ordinary skill in the art by combining general knowledge and common technical knowledge in the art and/or existing art through logical analyses, reasoning, or limited tests fall within the protection scope of the disclosure.

## Claims

1. A shower device lifting rod, **characterized by** comprising:
a first rod member (10), comprising a first connection portion (11) disposed at one end of the first rod member(10);
a second rod member (20), comprising a second connection portion (21) disposed at one end of the second rod member(20); and
a connection member (30), comprising a third connection portion (31) and a fourth connection portion (32) disposed at two ends of the connection member(30),
wherein the third connection portion (31) is fixedly connected to the first connection portion (11) after being inserted in the first connection portion (11), and the fourth connection portion (32) is fixedly connected to the second connection portion (21) after being inserted in the second connection portion (21).

2. The shower device lifting rod as claimed in claim 1, **characterized in that** a shape of the first connection portion (11) and a shape of the third connection portion (31) are matched, and a shape of the second connection portion (21) and a shape of the fourth connection portion (32) are matched.

3. The shower device lifting rod as claimed in claim 2, **characterized in that** a first protrusion (311) is provided on the third connection portion (31) in a length direction, a first groove (12) is provided on the first connection portion (11) in the length direction, and a shape of the first protrusion (311) and a shape of the first groove (12) are matched, wherein a second protrusion (321) is provided on the fourth connection portion (32) in the length direction, a second groove (22) is provided on the second connection portion (21) in the length direction, and a shape of the second protrusion (321) and a shape of the second groove (22) are matched.

4. The shower device lifting rod as claimed in claim 3, **characterized in that** an outward-extending third protrusion (33) is provided at a middle position along a circumference of the connection member (30), and the third protrusion (33) is configured to butt against end portions of the first rod member (10) and the second rod member (20).

5. The shower device lifting rod as claimed in claim 4, **characterized in that** the first connection portion (11) is engaged with or pin connected to the third connection portion (31), and the second connection portion (21) is engaged with or pin connected to the fourth connection portion (32).

6. The shower device lifting rod as claimed in claim 5, **characterized in that** the shower device lifting rod further comprises a first pin connection shaft (41) and a second pin connection shaft (42), wherein a first through hole (13) and a third through hole (312) are respectively provided at a corresponding position of the first connection portion (11) and the third connection portion (31), and a second through hole (23) and a fourth through hole (322) are respectively provided at a corresponding position of the second connection portion (21) and the fourth connection portion (32), wherein the first pin connection shaft (41) penetrates the first through hole (13) and the third through hole (312), and the second pin connection shaft (42) penetrates the second through hole (23) and the fourth through hole (322).

7. The shower device lifting rod as claimed in claim 5, **characterized in that** a first engaging recess (14) and a first engaging buckle (313) are respectively provided at a corresponding position of the first connection portion (11) and the third connection portion (31), and a second engaging recess (24) and a second engaging buckle (323) are respectively provided at a corresponding position of the second connection portion (21) and the fourth connection portion (32), wherein the first engaging buckle (313) is engaged with the first engaging recess (14) after the third connection portion (31) is inserted in the first connection portion (11), and the second engaging buckle (323) is engaged with the second engaging recess (24) after the fourth connection portion (32) is inserted in the second connection portion (21).
